# EUROPEAN PATENT APPLICATION

(11) **EP 4 088 980 A1**
(43) Date of publication of application: **16.11.2022**
(21) Application number: 22169450.8
(22) Date of filing: 22.04.2022
(51) Int. Cl.: B60W 50/14, G08G 1/0967, G08G 1/16, G08G 1/01, B60W 30/095, B60W 30/06, B62D 15/02

(54) **VEHICLE MANAGEMENT SYSTEM AND VEHICLE MANAGEMENT METHOD**

(30) Priority: 11.05.2021 JP 2021080540
(71) Applicant: TOYOTA JIDOSHA KABUSHIKI KAISHA, Toyota-shi, Aichi-ken, 471-8571 (JP)
(72) Inventor: OKAMURA, Ryuji, Toyota-shi, 471-8571 (JP); IMAZU, Takanori, Toyota-shi, 471-8571 (JP)
(74) Representative: J A Kemp LLP

(57) **Abstract**

A vehicle management system (100) manages a vehicle in a management area (AR) via communication. The vehicle management system (100) includes one or more processors (111). The one or more processors are configured to: acquire first vehicle information indicating at least a position of a first vehicle (1-1) configured to switch between autonomous driving and manual driving; acquire second vehicle information indicating at least a position of a second vehicle (1-2) that performs at least autonomous driving; determine whether a possibility of collision between the first vehicle being driven manually and the second vehicle being driven autonomously is higher than a first threshold, based on the first vehicle information and the second vehicle information; and when the possibility of collision is higher than the first threshold, instruct the first vehicle being driven manually to impose a driving limitation on the first vehicle.

## Description

### BACKGROUND OF THE INVENTION

### 1. Field of the Invention

The present disclosure relates to a technique of managing a vehicle in a management area via communication.

### 2. Description of Related Art

Japanese Unexamined Patent Application Publication No. 2020-154519 (JP 2020-154519 A) discloses a parking lot management device in an automated valet parking system. The parking lot management device manages driving of a plurality of autonomous vehicles in a parking lot. When a first autonomous vehicle and a second autonomous vehicle are going to successively pass through the same node in the parking lot, the parking lot management device determines whether there is a risk of collision between the first and second autonomous vehicles. When there is a risk of collision, the parking lot management device delays the planned passage time for the second autonomous vehicle to pass through that node.

### SUMMARY OF THE INVENTION

In situations where both manually driven and autonomous vehicles are present, there is a risk of collision between a manually driven vehicle and an autonomous vehicle.

It is one object of the present disclosure to provide a technique capable of reducing the possibility of collision between a manually driven vehicle and an autonomous vehicle.

An aspect of the present disclosure relates to a vehicle management system that manages a vehicle in a management area via communication. The vehicle management system includes one or more processors. The one or more processors are configured to: acquire first vehicle information indicating at least a position of a first vehicle configured to switch between autonomous driving and manual driving; acquire second vehicle information indicating at least a position of a second vehicle that performs at least autonomous driving; determine whether a possibility of collision between the first vehicle being driven manually and the second vehicle being driven autonomously is higher than a first threshold, based on the first vehicle information and the second vehicle information; and when the possibility of collision is higher than the first threshold, instruct the first vehicle being driven manually to impose a driving limitation on the first vehicle.

An aspect of the present disclosure relates to a vehicle management method for managing a vehicle in a management area via communication. The vehicle management method includes: acquiring first vehicle information indicating at least a position of a first vehicle configured to switch between autonomous driving and manual driving; acquiring second vehicle information indicating at least a position of a second vehicle that performs at least autonomous driving; determining whether a possibility of collision between the first vehicle being driven manually and the second vehicle being driven autonomously is higher than a first threshold, based on the first vehicle information and the second vehicle information; and when the possibility of collision is higher than the first threshold, instructing the first vehicle being driven manually to impose a driving limitation on the first vehicle.

According to the present disclosure, whether the possibility of collision between the first vehicle being driven manually and the second vehicle being driven autonomously is higher than the first threshold is determined based on the first vehicle information and the second vehicle information. When the possibility of collision is higher than the first threshold, the driving limitation is imposed on the first vehicle being driven manually. This reduces the possibility of collision between the first vehicle and the second vehicle. That is, higher safety can be ensured in situations where both manually driven and autonomous vehicles are present.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram illustrating an overview of a vehicle and a vehicle management system according to an embodiment of the present disclosure;
FIG. 2 is a conceptual diagram illustrating the overview of the vehicle management system according to the embodiment of the present disclosure;
FIG. 3 is a conceptual diagram illustrating a driving limitation instruction that is given by the vehicle management system according to the embodiment of the present disclosure;
FIG. 4 is a block diagram showing a configuration example of an in-vehicle system according to the embodiment of the present disclosure;
FIG. 5 is a block diagram showing an example of driving environment information according to the embodiment of the present disclosure;
FIG. 6 is a block diagram showing a configuration example of the vehicle management system according to the embodiment of the present disclosure;
FIG. 7 is a flowchart showing a process related to a driving limitation instruction that is given by the vehicle management system according to the embodiment of the present disclosure;
FIG. 8 is a flowchart showing an example of steps S300 and S400 in FIG. 7;
FIG. 9 is a conceptual diagram illustrating an example in which the vehicle management system according to the embodiment of the present disclosure is applied to automated valet parking; and
FIG. 10 is a conceptual diagram illustrating an example in which the vehicle management system according to the embodiment of the present disclosure is applied to a smart city.

### DETAILED DESCRIPTION OF EMBODIMENTS

An embodiment of the present disclosure will be described with reference to the accompanying drawings.

### 1. Overview

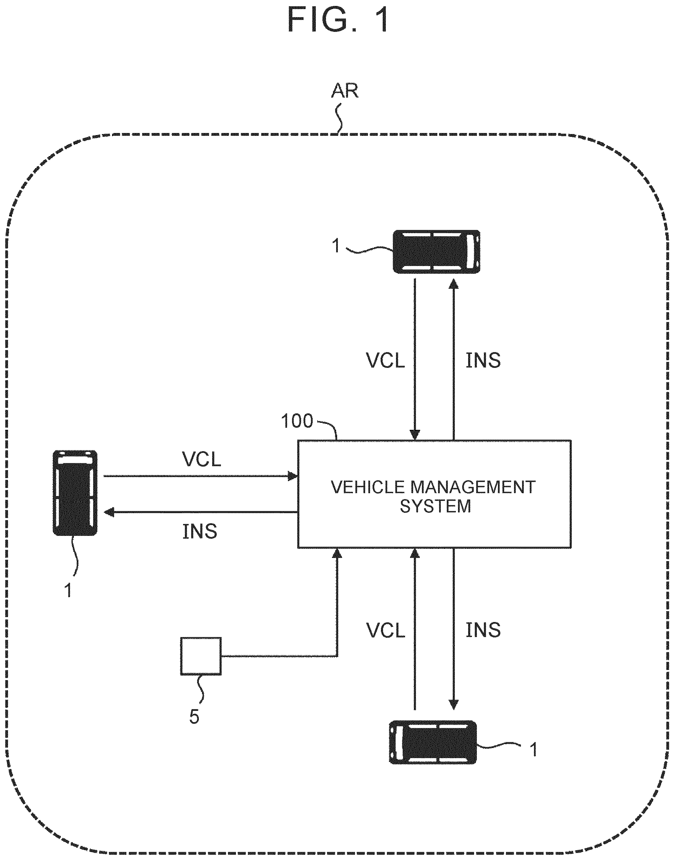

FIG. 1 is a conceptual diagram illustrating an overview of a vehicle 1 and a vehicle management system 100 according to an embodiment of the present disclosure. The vehicle 1 is capable of at least autonomous driving. It is assumed that autonomous driving as used herein refers to autonomous driving that does not necessarily require a driver to fully focus on driving (so-called Level 3 or higher of driving automation). The vehicle 1 may be able to switch between autonomous driving and manual driving. The vehicle 1 may be an AVP vehicle capable of automated valet parking (AVP) in a parking lot.

The vehicle management system 100 manages a plurality of the vehicles 1. The vehicle management system 100 is composed of one or more management servers. The vehicle management system 100 may be a distributed system. The range managed by the vehicle management system 100 is hereinafter referred to as the "management area AR." For example, the management area AR is a parking lot. Another example of the management area AR is a city such as a smart city.

The vehicle management system 100 can communicate with each vehicle 1. The vehicle management system 100 communicates with each vehicle 1 located in the management area AR and manages each vehicle 1. The management of the vehicle 1 includes collecting information on the vehicle 1, monitoring the state of the vehicle 1, giving instructions to the vehicle 1, and remote control of the vehicle 1.

For example, each vehicle 1 sends "vehicle information VCL" indicating its position, state, etc. to the vehicle management system 100. The vehicle management system 100 receives the vehicle information VCL from each vehicle 1 via communication. That is, the vehicle management system 100 collects the vehicle information VCL on a large number of vehicles 1 under management. The vehicle management system 100 can monitor the state of each vehicle 1 based on the vehicle information VCL. The vehicle management system 100 can also grasp the distance between the vehicles 1 and estimate the possibility of collision etc., based on the vehicle information VCL.

The vehicle management system 100 sends a "vehicle control instruction INS" to the vehicle 1. The vehicle control instruction INS is an instruction to the vehicle 1. For example, the vehicle control instruction INS tells the vehicle 1 to perform at least one of the following operations: acceleration, deceleration, and steering. The vehicle management system 100 can remotely control the vehicle 1 by sending the vehicle control instruction INS to the vehicle 1.

An infrastructure camera 5 that monitors the surroundings may be installed in the management area AR. The vehicle management system 100 communicates with the infrastructure camera 5 and acquires image information captured by the infrastructure camera 5. The vehicle management system 100 can also identify the vehicle 1 and perceive the position of the vehicle 1 by analyzing the image information. That is, the vehicle management system 100 can also acquire vehicle information VCL (particularly, vehicle position information) using the infrastructure camera 5.

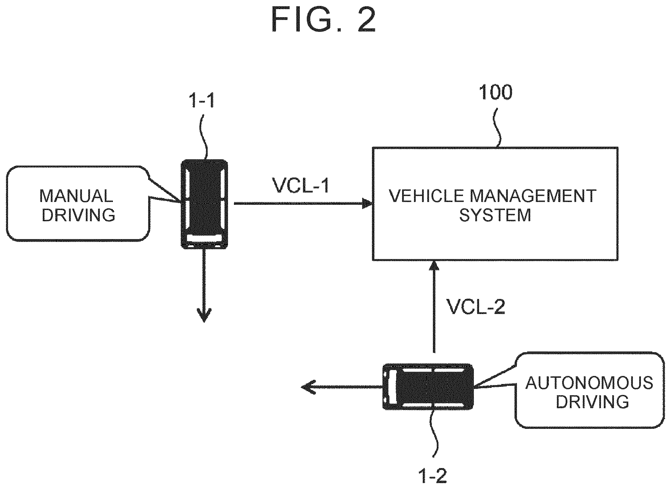

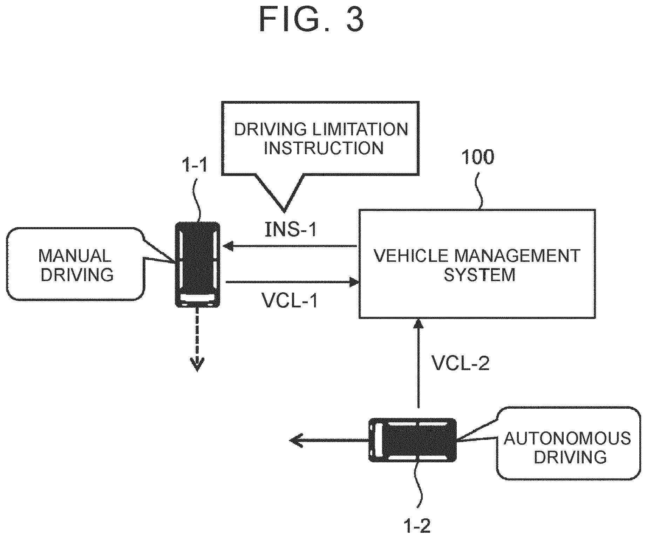

FIGS. 2 and 3 show a situation where both a manually driven vehicle and an autonomous vehicle are present. A first vehicle 1-1 is a vehicle 1 capable of switching between autonomous driving and manual driving. A second vehicle 1-2 is a vehicle 1 that is driven at least autonomously. In the situation shown in FIGS. 2 and 3, the first vehicle 1-1 is driven by manual driving, and the second vehicle 1-2 is driven by autonomous driving.

The vehicle management system 100 communicates with the first vehicle 1-1 and the second vehicle 1-2 to manage the first vehicle 1-1 and the second vehicle 1-2. That is, the vehicle management system 100 can manage not only the second vehicle 1-2 being driven autonomously but also the first vehicle 1-1 being driven manually. For example, the vehicle management system 100 can also intervene in the driving of the first vehicle 1-1 being driven manually by sending a vehicle control instruction INS to the first vehicle 1-1 being driven manually.

In the example shown in FIGS. 2 and 3, the first vehicle 1-1 being driven manually and the second vehicle 1-2 being driven autonomously are approaching each other. Therefore, there is a risk of collision between the first vehicle 1-1 and the second vehicle 1-2. According to the present embodiment, the management function of the vehicle management system 100 is used to reduce the possibility of collision between the first vehicle 1-1 and the second vehicle 1-2.

Specifically, the vehicle management system 100 acquires first vehicle information VCL-1 indicating at least the position of the first vehicle 1-1. The vehicle management system 100 also acquires second vehicle information VCL-2 indicating at least the position of the second vehicle 1-2. The vehicle management system 100 then estimates the possibility of collision (risk of collision) between the first vehicle 1-1 and the second vehicle 1-2, based on the first vehicle information VCL-1 and the second vehicle information VCL-2.

The possibility of collision may be expressed numerically or by levels such as "zero," "low," "medium," and "high." For example, the possibility of collision is determined to be "zero" when the distance between the first vehicle 1-1 and the second vehicle 1-2 is greater than a first distance, and the possibility of collision is determined to be "low" when the first vehicle 1-1 and the second vehicle 1-2 have approached to each other to the first distance or less. The possibility of collision is determined to be "medium" when the first vehicle 1-1 and the second vehicle 1-2 have approached each other to a second distance or less. The second distance is smaller than the first distance. The possibility of collision can be calculated more accurately when the first vehicle information VCL-1 and the second vehicle information VCL-2 include the vehicle state such as a vehicle speed.

The vehicle management system 100 having both the first vehicle information VCL-1 and the second vehicle information VCL-2 can accurately estimate the possibility of collision between the first vehicle 1-1 and the second vehicle 1-2. For example, the vehicle management system 100 having both the first vehicle information VCL-1 and the second vehicle information VCL-2 can accurately estimate the possibility of collision even if the first vehicle 1-1 and the second vehicle 1-2 are in each other's blind spots.

When the possibility of collision between the first vehicle 1-1 and the second vehicle 1-2 is higher than a first threshold, the vehicle management system 100 intervenes in the driving of the vehicle(s) in order to reduce the possibility of collision. In particular, as shown in FIG. 3, the vehicle management system 100 intervenes in the driving of the "first vehicle 1-1 being driven manually." More specifically, the vehicle management system 100 communicates with the first vehicle 1-1 being driven manually and sends a first vehicle control instruction INS-1 to the first vehicle 1-1. The first vehicle control instruction INS-1 tells the first vehicle 1-1 to impose a driving limitation on itself. The driving limitation includes at least one of the following: (a) decelerate, (b) stop, and (c) travel at or below a specified speed limit. Upon receiving the first vehicle control instruction INS-1, the first vehicle 1-1 impose the driving limitation on itself according to the first vehicle control instruction INS-1. This reduces the possibility of collision between the first vehicle 1-1 and the second vehicle 1-2. That is, higher safety can be ensured in situations where both manually driven and autonomous vehicles are present.

The vehicle management system 100 may tighten the driving limitation as the possibility of collision increases. For example, at the stage where the possibility of collision is low, the first vehicle control instruction INS-1 specifies a speed limit and tells the first vehicle 1-1 to travel at or below the specified speed limit. At the stage where the possibility of collision is high, the first vehicle control instruction INS-1 tells the first vehicle 1-1 to decelerate and stop. An appropriate driving limitation can thus be imposed according to the possibility of collision.

When instructing the first vehicle 1-1 being driven manually to impose the driving limitation on itself, the vehicle management system 100 may notify the driver of the first vehicle 1-1 that "the driving limitation is going to be imposed." In this case, the first vehicle control instruction INS-1 tells the first vehicle 1-1 not only to "impose the driving limitation on itself' but also to "notify the driver of the driving limitation." This reduces the discomfort felt by the driver of the first vehicle 1-1 being driven manually.

When instructing the first vehicle 1-1 being driven manually to impose the driving limitation on itself, the vehicle management system 100 may not instruct the second vehicle 1-2 being driven autonomously to impose the driving limitation on itself. The reason why the driving limitation is imposed on the first vehicle 1-1 being driven manually rather than on the second vehicle 1-2 being driven autonomously is as follows.

An autonomous driving system can accurately perceive the surroundings than humans. For example, the autonomous driving system can accurately perceive a wide range of situations including situations in front of, alongside, and behind the vehicle 1. Such an autonomous driving system is highly likely to appropriately avoid a collision with another vehicle 1. On the other hand, the human field of view is limited. Humans can also fall asleep or lose concentration. Moreover, there may be drivers who drive recklessly. Therefore, as long as there is a manually driven vehicle, it is necessary to assume that there is a certain level of possibility of collision. According to the present embodiment, a driving limitation is imposed on the first vehicle 1-1 being driven manually. This can effectively reduce the possibility of collision between the manually driven vehicle and the autonomous vehicle.

Since the possibility of collision between the manually driven vehicle and the autonomous vehicle is reduced, situations where both manually driven and autonomous vehicles are present are more likely to be allowed. That is, the management area AR (e.g., a parking lot or a city) can be designed so as to allow both manually driven and autonomous vehicles to be present to some extent. This is suitable for developing services using autonomous driving.

Hereinafter, the vehicle 1 (in-vehicle system 10) and the vehicle management system 100 according to the present embodiment will be described in more detail.

### 2. In-vehicle system

### 2-1. Configuration example

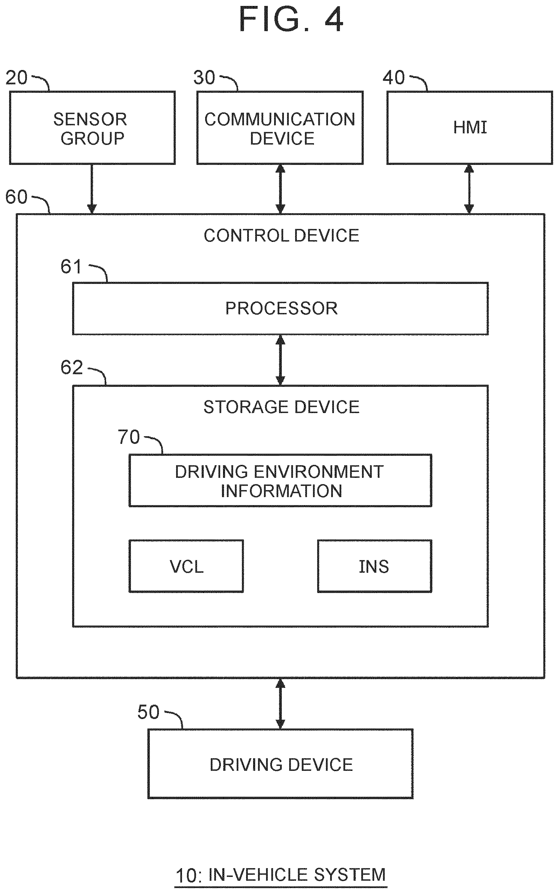

FIG. 4 is a block diagram showing a configuration example of the in-vehicle system 10 mounted on the vehicle 1 according to the present embodiment. The in-vehicle system 10 includes a sensor group 20, a communication device 30, a Human Machine Interface (HMI) 40, a driving device 50, and a control device 60.

The sensor group 20 includes a vehicle state sensor that detects the state of the vehicle 1. The vehicle state sensor includes a speed sensor, an acceleration sensor, a yaw rate sensor, and a steering angle sensor. The sensor group 20 further includes a perception sensor that perceives (detects) the surroundings of the vehicle 1. Examples of the perception sensor include a camera, a Laser Imaging Detection and Ranging (LIDAR), and a radar. The sensor group 20 further includes a position sensor that detects the position and orientation of the vehicle 1. An example of the position sensor is a Global Positioning System (GPS) sensor.

The communication device 30 communicates with the outside of the vehicle 1. For example, the communication device 30 communicates with the vehicle management system 100.

The HMI 40 is an interface that provides information to the driver and receives information from the driver. Examples of the HMI 40 include a display, a touch panel, and a head-up display.

The driving device 50 includes a steering device, a drive device, and a braking device. The steering device steers wheels. For example, the steering device includes an electric power steering (EPS) system. The drive device is a power source that generates a driving force. Examples of the drive device include an engine, an electric motor, and an in-wheel motor. The braking device generates a braking force.

The control device 60 controls the vehicle 1. The control device 60 includes one or more processors 61 (hereinafter simply referred to as the "processor 61") and one or more storage devices 62 (hereinafter simply referred to as the "storage device 62"). The processor 61 performs various processes. For example, the processor 61 includes a central processing unit (CPU). The storage device 62 stores various kinds of information. Examples of the storage device 62 include a volatile memory, a nonvolatile memory, a hard disk drive (HDD), and a solid state drive (SSD). Various processes that are performed by the control device 60 are implemented by the processor 61 executing a control program that is a computer program. The control program is stored in the storage device 62 or recorded on a computer-readable recording medium. The control device 60 may include one or more electronic control units (ECUs).

### 2-2. Driving environment information

The processor 61 acquires driving environment information 70 by using the sensor group 20. The driving environment information 70 indicates the driving environment of the vehicle 1. The driving environment information 70 is stored in the storage device 62.

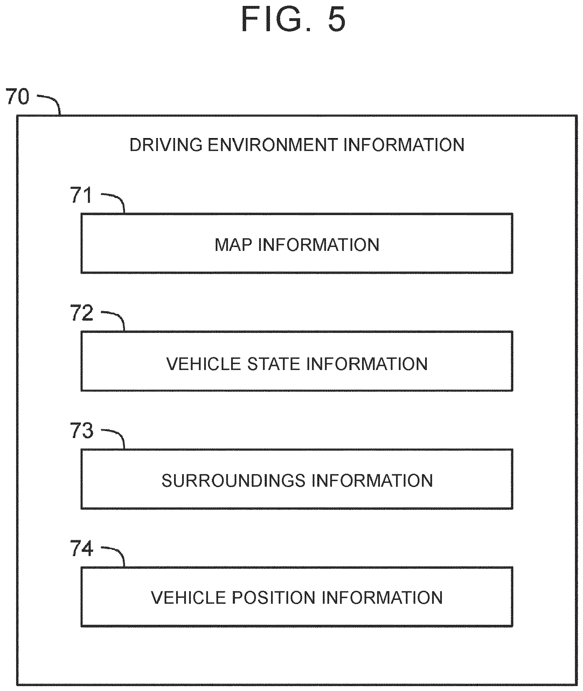

FIG. 5 is a block diagram showing an example of the driving environment information 70. The driving environment information 70 includes map information 71, vehicle state information 72, surroundings information 73, and vehicle position information 74.

The map information 71 includes at least a map of the management area AR Examples of the map information 71 include a general navigation map, a high definition three-dimensional map, and a parking lot map. The map information 71 may indicate a landmark position to be used for localization. For example, the processor 61 acquires the map information 71 from the vehicle management system 100 or other external system.

The vehicle state information 72 indicates the vehicle state (vehicle speed etc.) detected by the vehicle state sensor. The processor 61 acquires the vehicle state information 72 from the vehicle state sensor. The vehicle state information 72 may also indicate the current driving state (manual driving or autonomous driving).

The surroundings information 73 indicates the perception results from the perception sensor. For example, the surroundings information 73 includes an image captured by a camera. The surroundings information 73 may include object information on an object around the vehicle 1. Examples of the object around the vehicle 1 include pedestrians, other vehicles (preceding vehicles, parked vehicles, etc.), white lines, signs, traffic lights, and roadside structures. The object information indicates the relative position and relative speed of the object with respect to the vehicle 1. The processor 61 acquires the surroundings information 73 based on the perception results from the perception sensor.

The vehicle position information 74 is information indicating the position of the vehicle 1. The processor 61 acquires the vehicle position information 74 from the detection results from the position sensor. The processor 61 may acquire accurate vehicle position information 74 by a well-known localization process using the map information 71 and the surroundings information 73.

### 2-3. Communication process

The processor 61 communicates with the vehicle management system 100 via the communication device 30.

For example, the processor 61 sends vehicle information VCL to the vehicle management system 100 via the communication device 30. The vehicle information VCL includes a part of the driving environment information 70. The vehicle information VCL includes at least the vehicle position information 74. The vehicle information VCL may include the vehicle state information 72. The vehicle information VCL may include the surroundings information 73.

The processor 61 also receives a vehicle control instruction INS from the vehicle management system 100 via the communication device 30.

### 2-4. Information provision process

The processor 61 provides necessary information to the driver via the HMI 40. For example, the processor 61 displays a notification received from the vehicle management system 100 on a display of the HMI 40.

### 2-5. Vehicle driving control

The processor 61 performs vehicle driving control for controlling driving of the vehicle 1. The vehicle driving control includes steering control, acceleration control, and deceleration control. The processor 61 performs the vehicle driving control by controlling the driving device 50 (steering device, drive device, and braking device).

The processor 61 also performs autonomous driving control based on the driving environment information 70. For example, the processor 61 generates a driving plan for the vehicle 1 based on the driving environment information 70. The driving plan includes a rough desired route to a destination and a desired operation. Examples of the desired operation include keeping the current lane, changing lanes, and avoiding an obstacle. The processor 61 also generates a desired trajectory (desired path) that is necessary for the vehicle 1 to travel according to the driving plan, based on the driving environment information 70. The desired trajectory includes a desired position and a desired speed. The processor 61 then performs the vehicle driving control so that the vehicle 1 follows the desired trajectory.

When the processor 61 receives a vehicle control instruction INS from the vehicle management system 100, the processor 61 performs the vehicle driving control according to the vehicle control instruction INS. For example, when the vehicle control instruction INS indicates deceleration, the processor 61 performs deceleration control.

In the case of manual driving, the processor 61 performs the vehicle driving control according to driving maneuvers of the driver. However, when the processor 61 receives a vehicle control instruction INS from the vehicle management system 100, the processor 61 gives priority to the vehicle driving control according to the vehicle control instruction INS. That is, the processor 61 may intervene in manual driving.

### 3. Vehicle management system

### 3-1. Configuration example

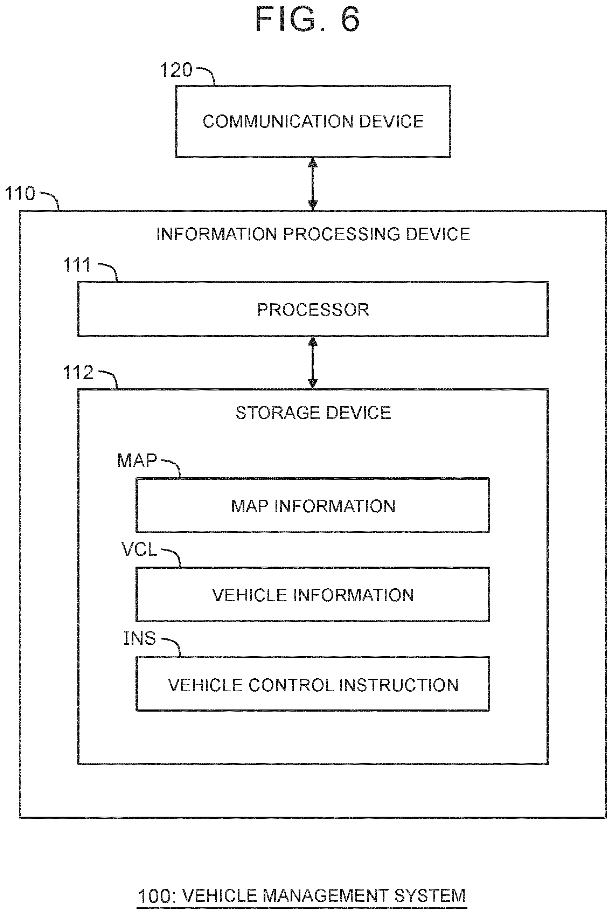

FIG. 6 is a block diagram showing a configuration example of the vehicle management system 100 according to the present embodiment. For example, the vehicle management system 100 is implemented by a management server. A plurality of management servers may perform distributed processing. The vehicle management system 100 includes an information processing device 110 and a communication device 120.

The information processing device 110 performs various kinds of information processing. The information processing device 110 includes one or more processors 111 (hereinafter simply referred to as the "processor 111") and one or more storage devices 112 (hereinafter simply referred to as the "storage device 112"). The processor 111 performs various processes. For example, the processor 111 includes a CPU. The storage device 112 stores various kinds of information. Examples of the storage device 112 include a volatile memory, a nonvolatile memory, an HDD, and an SSD. The functions of the information processing device 110 are implemented by the processor 111 executing a vehicle management program that is a computer program. The vehicle management program is stored in the storage device 112. The vehicle management program may be recorded on a computer-readable recording medium. The vehicle management program may be provided via a network.

The communication device 120 communicates with the outside. For example, the communication device 120 communicates with the vehicle 1. The communication device 120 communicates with the infrastructure camera 5. The communication device 120 also communicates with a user terminal.

### 3-2. Various kinds of information

Map information MAP is similar to the map information 71 and includes at least a map of the management area AR. Examples of the map information MAP include a general navigation map, a high definition three-dimensional map, and a parking lot map. The map information MAP is provided in advance to the vehicle management system 100 and stored in the storage device 112.

The processor 111 communicates with each vehicle 1 via the communication device 120 and receives vehicle information VCL from each vehicle 1. The vehicle information VCL includes at least the vehicle position information 74. The vehicle information VCL may include the vehicle state information 72. The vehicle information VCL may include the surroundings information 73.

The processor 111 also communicates with the infrastructure camera 5 installed in the management area AR and acquires image information captured by the infrastructure camera 5. The processor 111 can also identify the vehicle 1 and perceive the position of the vehicle 1 by analyzing the image information. That is, the processor 111 can also acquire vehicle information VCL (particularly, the vehicle position information 74) using the infrastructure camera 5.

The processor 111 generates a vehicle control instruction INS as needed. The vehicle control instruction INS is an instruction to the vehicle 1. For example, the vehicle control instruction INS tells the vehicle 1 to perform at least one of the following operations: acceleration, deceleration, and steering. The processor 111 communicates via the communication device 120 with the vehicle 1 to which the vehicle control instruction INS is to be sent, and sends the vehicle control instruction INS to the vehicle 1.

### 3-3. Process related to driving limitation

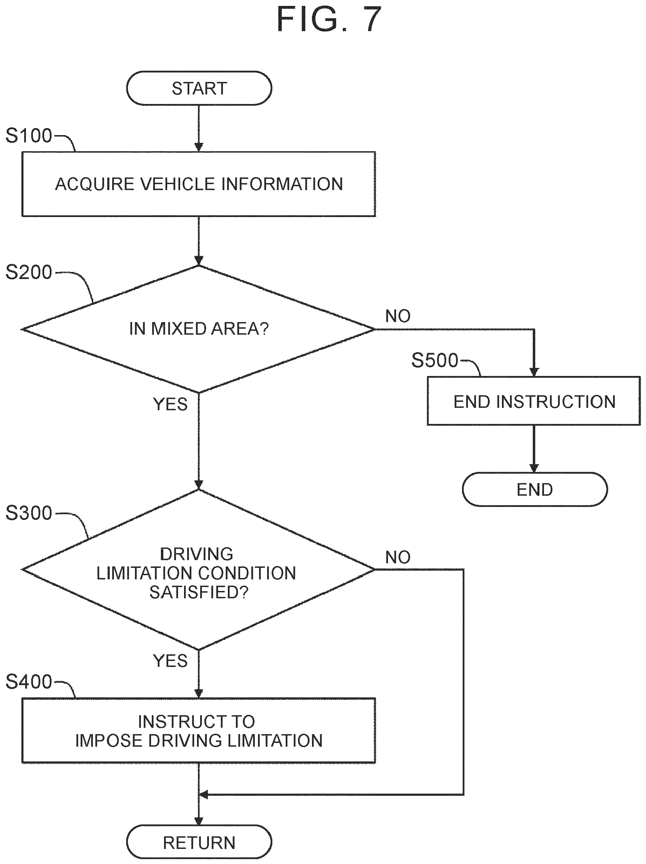

FIG. 7 is a flowchart showing a process related to the driving limitation instruction according to the present embodiment. In this example, the first vehicle 1-1 being driven manually and the second vehicle 1-2 being driven autonomously will be considered (see FIGS. 2 and 3).

In step S100, the processor 111 acquires the first vehicle information VCL-1 including at least the vehicle position information 74 of the first vehicle 1-1. The processor 111 also acquires the second vehicle information VCL-2 including at least the vehicle position information 74 of the second vehicle 1-2.

In step S200, the processor 111 determines whether the first vehicle 1-1 is present in a "mixed area." The mixed area is an area included in the management area AR and is an area where both autonomous and manual driving vehicles are assumed to be present. The mixed area is defined in advance and is registered in advance in the map information MAP. The processor 111 determines whether the first vehicle 1-1 is present in the mixed area, based on the map information MAP and the first vehicle information VCL-1. When the first vehicle 1-1 is present in the mixed area (step S200; YES), the routine proceeds to step S300. When the first vehicle 1-1 has left the mixed area (step S200; NO), the routine proceeds to step S500.

In step S300, the processor 111 determines whether a "driving limitation condition" is satisfied. The driving limitation condition is a condition for imposing a driving limitation on the first vehicle 1-1 being driven manually. A specific example of the driving limitation condition will be described later. When the driving limitation condition is satisfied (step S300; YES), the routine proceeds to step S400. When the driving limitation condition is not satisfied (step S300; NO), the routine returns to step S100.

In step S400, the processor 111 instructs the first vehicle 1-1 being driven manually to impose the driving limitation on itself. More specifically, the processor 111 communicates with the first vehicle 1-1 being driven manually, and sends to the first vehicle 1-1 the first vehicle control instruction INS-1 that tells the first vehicle 1-1 to impose the driving limitation on itself. The driving limitation includes at least one of the following: (a) decelerate, (b) stop, and (c) travel at or below a specified speed limit. Upon receiving the first vehicle control instruction INS-1, the in-vehicle system 10 of the first vehicle 1-1 imposes the driving limitation on the first vehicle 1-1 according to the first vehicle control instruction INS-1.

In step S400, the processor 111 may notify the driver of the first vehicle 1-1 that "the driving limitation is going to be imposed." In this case, the first vehicle control instruction INS-1 tells the first vehicle 1-1 not only to "impose the driving limitation on itself' but also to "notify the driver of the driving limitation." Upon receiving the first vehicle control instruction INS-1, the in-vehicle system 10 of the first vehicle 1-1 gives a notification to the driver via the HMI 40. This reduces the discomfort felt by the driver of the first vehicle 1-1 being driven manually.

In step S500, the processor 111 ends the driving limitation instruction to the first vehicle 1-1. The processor 111 may disconnect communication with the first vehicle 1-1.

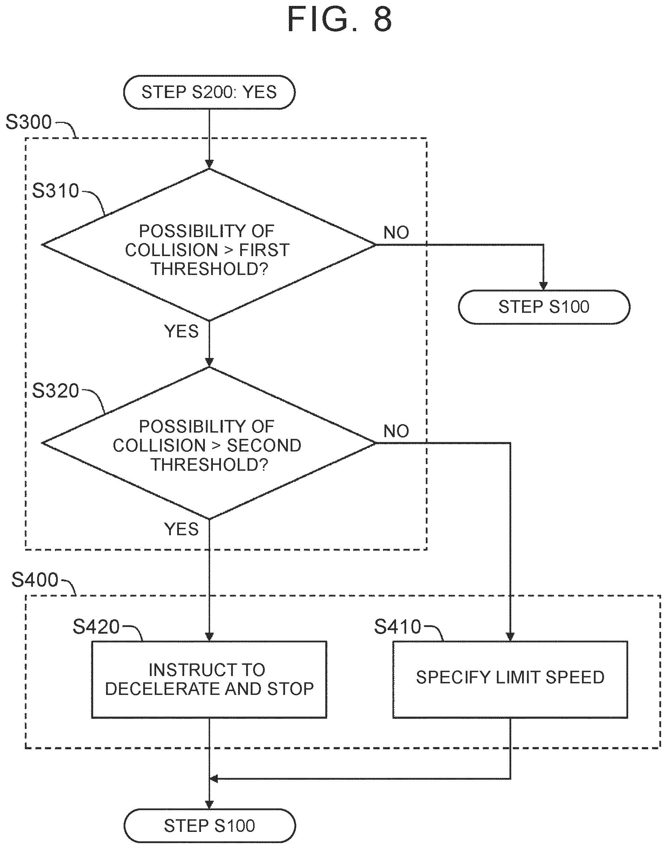

FIG. 8 is a flowchart showing an example of steps S300 and S400 in FIG. 7.

In step S310, the processor 111 determines whether the possibility of collision (risk of collision) between the first vehicle 1-1 and the second vehicle 1-2 is higher than the first threshold.

More specifically, the processor 111 estimates the possibility of collision (risk of collision) between the first vehicle 1-1 and the second vehicle 1-2, based on the first vehicle information VCL-1 and the second vehicle information VCL-2. The possibility of collision may be expressed numerically or by levels such as "zero," "low," "medium," and "high." For example, the possibility of collision is determined to be "zero" when the distance between the first vehicle 1-1 and the second vehicle 1-2 is greater than a first distance, and the possibility of collision is determined to be "low" when the first vehicle 1-1 and the second vehicle 1-2 have approached to each other to the first distance or less. The possibility of collision is determined to be "medium" when the first vehicle 1-1 and the second vehicle 1-2 have approached each other to a second distance or less. The second distance is smaller than the first distance. The possibility of collision can be calculated more accurately when the first vehicle information VCL-1 and the second vehicle information VCL-2 include the vehicle state such as a vehicle speed.

For example, the possibility of collision between the first vehicle 1-1 and the second vehicle 1-2 being higher than the first threshold means that the first vehicle 1-1 and the second vehicle 1-2 have approached each other to the first distance or less. In this case, the processor 111 determines whether the first vehicle 1-1 and the second vehicle 1-2 have approached each other to the first distance or less, based on the first vehicle information VCL-1 and the second vehicle information VCL-2.

When the possibility of collision between the first vehicle 1-1 and the second vehicle 1-2 is equal to or lower than the first threshold (step S310; NO), the driving limitation condition is not satisfied (step S300; NO), and the routine returns to step S100. When the possibility of collision between the first vehicle 1-1 and the second vehicle 1-2 is higher than the first threshold (step S310; YES), the routine proceeds to step S320.

In step S320, the processor 111 determines whether the possibility of collision between the first vehicle 1-1 and the second vehicle 1-2 is higher than a second threshold. The second threshold is higher than the first threshold.

For example, the possibility of collision between the first vehicle 1-1 and the second vehicle 1-2 being higher than the second threshold means that the first vehicle 1-1 and the second vehicle 1-2 have approached each other to the second distance or less. The second distance is smaller than the first distance.

In another example, when the first vehicle information VCL-1 and the second vehicle information VCL-2 include a vehicle speed, the processor 111 may calculate the time to collision (TTC) between the first vehicle 1-1 and the second vehicle 1-2. In this case, the possibility of collision between the first vehicle 1-1 and the second vehicle 1-2 being higher than the second threshold means that the TTC is less than a predetermined threshold.

When the possibility of collision between the first vehicle 1-1 and the second vehicle 1-2 is equal to or lower than the second threshold (step S320; NO), the routine proceeds to step S410. When the possibility of collision between the first vehicle 1-1 and the second vehicle 1-2 is higher than the second threshold (step S320; YES), the routine proceeds to step S420.

In step S410, the processor 111 specifies a speed limit for the first vehicle 1-1 being driven manually, and instructs the first vehicle 1-1 to travel at or below the specified speed limit. That is, the first vehicle control instruction INS-1 specifies a speed limit and tells the first vehicle 1-1 to travel at or below the specified speed limit.

The processor 111 may set a specified speed limit for the first vehicle 1-1 being driven manually, according to the type of the second vehicle 1-2 being driven autonomously. For example, it is assumed that an AVP vehicle capable of automated valet parking is required to travel at a first speed (e.g., 10 km/s) when travelling in a parking lot by autonomous driving. When the second vehicle 1-2 being driven autonomously is an AVP vehicle travelling at a relatively low speed, the specified speed limit for the first vehicle 1-1 may be set to a relatively high speed. In another example, it is assumed that an autonomous bus on a road is required to travel at a second speed (e.g., 20 km/s) higher than the first speed. When the second vehicle 1-2 being driven autonomously is an autonomous bus, the specified speed limit for the first vehicle 1-1 is set to a speed lower than when the second vehicle 1-2 is an AVP vehicle. Higher safety can thus be ensured by changing the specified speed limit according to the type of the second vehicle 1-2.

In step S420, the processor 111 instructs the first vehicle 1-1 being driven manually to decelerate and stop. The possibility of collision is thus further reduced, and higher safety can be ensured.

### 3-4. Others

The vehicle management system 100 and the in-vehicle system 10 may have a common part. That is, the in-vehicle system 10 may perform a part of the process shown in FIGS. 7 and 8. In any case, the functions of the vehicle management system 100 according to the present embodiment are implemented by one or more processors.

### 4. Application examples

### 4-1. Automated valet parking

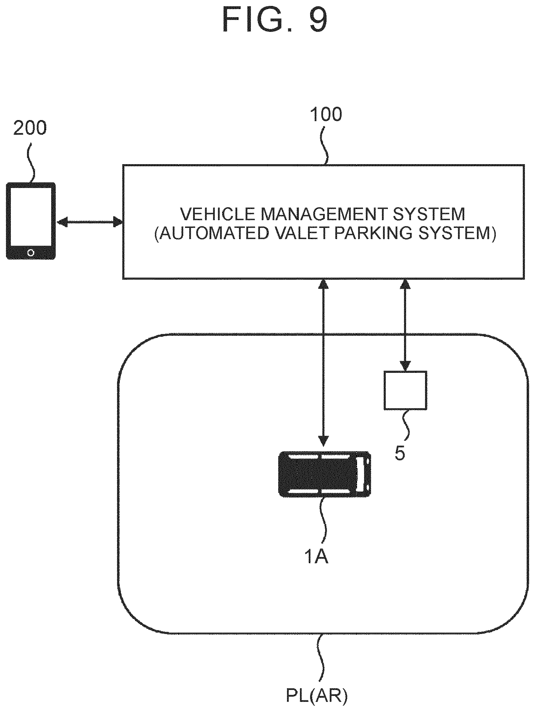

FIG. 9 is a conceptual diagram illustrating an example in which the vehicle management system 100 according to the present embodiment is applied to automated valet parking (AVP). The vehicle management system 100 corresponds to an automated valet parking system that manages automated valet parking in a parking lot PL.

An AVP vehicle 1A is a vehicle 1 capable of automated valet parking. The AVP vehicle 1A can communicate with the vehicle management system 100. The AVP vehicle 1A can be autonomously driven at least in the parking lot PL.

The vehicle management system 100 manages the AVP vehicle 1A in the parking lot PL. That is, the parking lot PL corresponds to the management area AR. The vehicle management system 100 can communicate with the AVP vehicle 1A in the parking lot PL. The vehicle management system 100 can communicate with a user terminal 200 that is operated by a user. An example of the user terminal 200 is a smartphone.

The AVP vehicle 1A enters (checks in) the parking lot PL as follows. The AVP vehicle 1A with the user gets to a drop-off and pickup area of the parking lot PL and stops. The user gets out of the AVP vehicle 1A at the drop-off and pickup area. The user requests entry of the AVP vehicle 1A by using the user terminal 200. The vehicle management system 100 assigns a parking space to the AVP vehicle 1A. The vehicle management system 100 communicates with the AVP vehicle 1A and sends to the AVP vehicle 1A a vehicle control instruction INS that tells the AVP vehicle 1A to park in the assigned parking space. The vehicle control instruction INS includes the map information 71 of the parking lot PL and position information of the assigned parking space. The AVP vehicle 1A performs the vehicle driving control according to the vehicle control instruction INS. Specifically, the AVP vehicle 1A autonomously moves from the drop-off and pickup area to the assigned parking space and autonomously parks in the assigned parking space.

The AVP vehicle 1A leaves (checks out) the parking lot PL as follows. The user requests return of the AVP vehicle 1A by using the user terminal 200. The vehicle management system 100 communicates with the AVP vehicle 1A and sends to the AVP vehicle 1A a vehicle control instruction INS that tells the AVP vehicle 1A to leave the parking space and return to the drop-off and pickup area. The vehicle control instruction INS includes the map information 71 of the parking lot PL and the position information of the drop-off and pickup area. The AVP vehicle 1A performs the vehicle driving control according to the vehicle control instruction INS. Specifically, the AVP vehicle 1A autonomously moves from the parking space to the drop-off and pickup area. The AVP vehicle 1A gets to the drop-off and pickup area and stops. The user gets into the AVP vehicle 1A. The AVP vehicle 1A starts moving toward the next destination.

When manual driving is also permitted in such a parking lot PL, there may be a situation where both manually driven and autonomous vehicles are present in the parking lot PL.

For example, providing additional services (e.g., inspection, car wash, and tire change) to a parked AVP vehicle 1A will be considered. In this case, there is a possibility that a parking lot staff member may move the AVP vehicle 1A by manual driving.

In another example, a rental car facility that uses automated valet parking will be considered. There is a possibility that a rental car staff member may move the AVP vehicle 1A in the parking lot PL by manual driving for management, organization, etc. There is also a possibility that a rental car staff member may manually drive the AVP vehicle 1A for faster check-in or checkout.

In still another example, there may be a case where the user can choose whether to use the AVP service or park the AVP vehicle 1A himself or herself. For example, when the drop-off and pickup area is crowded, the user may choose to park the AVP vehicle 1A himself or herself.

Accordingly, there may be a situation where both manually driven and autonomous vehicles are present in the parking lot PL where autonomous valet parking is possible. That is, at least a part of the parking lot PL where autonomous valet parking is possible may become a mixed area. A driving limitation instruction that is given by the vehicle management system 100 according to the present embodiment is therefore useful.

### 4-2. Smart city

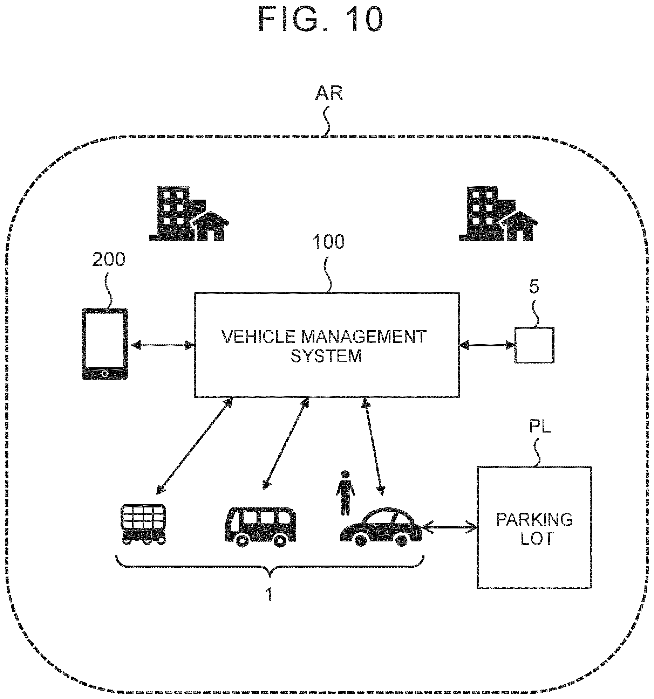

FIG. 10 is a conceptual diagram illustrating an example in which the vehicle management system 100 according to the present embodiment is applied to a smart city. The management area AR is a smart city. The vehicle management system 100 manages the vehicles 1 in the management area AR. There are various types of vehicles 1 in the smart city. For example, the vehicles 1 include a private vehicle, a taxi, and a bus. A part of these vehicles 1 is an autonomous vehicle(s). The vehicles 1 may be able to switch between autonomous driving and manual driving. The vehicles 1 also include a logistics robot that autonomously delivers goods. Automated valet parking may be performed between a desired location in the smart city and the parking lot PL.

In such a smart city, there may be a situation where both manually driven and autonomous vehicles are present. That is, at least a part of the smart city may become a mixed area. A driving limitation instruction that is given by the vehicle management system 100 according to the present embodiment is therefore also useful for the smart city.

## Claims

1. A vehicle management system (100) that manages a vehicle in a management area (AR) via communication, the vehicle management system (100) comprising one or more processors (111), the one or more processors being configured to:
acquire first vehicle information indicating at least a position of a first vehicle (1-1) configured to switch between autonomous driving and manual driving;
acquire second vehicle information indicating at least a position of a second vehicle (1-2) that performs at least autonomous driving;
determine whether a possibility of collision between the first vehicle being driven manually and the second vehicle being driven autonomously is higher than a first threshold, based on the first vehicle information and the second vehicle information; and
when the possibility of collision is higher than the first threshold, instruct the first vehicle being driven manually to impose a driving limitation on the first vehicle.

2. The vehicle management system (100) according to claim 1, wherein the driving limitation includes at least one of following: decelerate, stop, and travel at or below a specified speed limit.

3. The vehicle management system (100) according to claim 1 or 2, wherein the one or more processors (111) are configured not to instruct the second vehicle (1-2) being driven autonomously to impose the driving limitation on the second vehicle when instructing the first vehicle (1-1) being driven manually to impose the driving limitation on the first vehicle.

4. The vehicle management system (100) according to any one of claims 1 to 3, wherein the one or more processors (111) are further configured to notify a driver of the first vehicle (1-1) that the driving limitation is going to be imposed, when instructing the first vehicle being driven manually to impose the driving limitation on the first vehicle.

5. The vehicle management system (100) according to any one of claims 1 to 4, wherein the possibility of collision being higher than the first threshold includes that the first vehicle (1-1) being driven manually and the second vehicle (1-2) being driven autonomously have approached each other to a first distance or less.

6. The vehicle management system (100) according to any one of claims 1 to 5, wherein the one or more processors (111) are configured to:
determine whether the possibility of collision is higher than a second threshold that is higher than the first threshold, based on the first vehicle information and the second vehicle information;
when the possibility of collision is higher than the first threshold and is equal to or lower than the second threshold, instruct the first vehicle (1-1) being driven manually to travel at or below a specified speed limit; and
when the possibility of collision is higher than the second threshold, instruct the first vehicle being driven manually to decelerate and stop.

7. The vehicle management system (100) according to claim 6, wherein the one or more processors (111) are configured to set the specified speed limit according to a type of the second vehicle (1-2).

8. The vehicle management system (100) according to any one of claims 1 to 7, wherein:
the management area (AR) includes a mixed area where both an autonomous vehicle and a manually driven vehicle are assumed to be present; and
the one or more processors (111) are configured to instruct the first vehicle (1-1) being driven manually in the mixed area to impose the driving limitation on the first vehicle.

9. The vehicle management system (100) according to any one of claims 1 to 8, wherein the first vehicle (1-1) and the second vehicle (1-2) are vehicles configured to perform automated valet parking using the autonomous driving.

10. A vehicle management method for managing a vehicle in a management area (AR) via communication, the vehicle management method comprising:
acquiring first vehicle information indicating at least a position of a first vehicle (1-1) configured to switch between autonomous driving and manual driving;
acquiring second vehicle information indicating at least a position of a second vehicle (1-2) that performs at least autonomous driving;
determining whether a possibility of collision between the first vehicle being driven manually and the second vehicle being driven autonomously is higher than a first threshold, based on the first vehicle information and the second vehicle information; and
when the possibility of collision is higher than the first threshold, instructing the first vehicle being driven manually to impose a driving limitation on the first vehicle.
